# EUROPEAN PATENT APPLICATION

(11) **EP 2 339 890 A1**
(43) Date of publication of application: **29.06.2011**
(21) Application number: 10016051.4
(22) Date of filing: 23.12.2010
(51) Int. Cl.: H04W 72/04

(54) **Method and apparatus to allocate random access channel (rach) resources for carrier aggregation in a wireless communication network**

(30) Priority: 24.12.2009 US 290173 P
(71) Applicant: Innovative Sonic Corporation, Taipei City 11493 (TW)
(72) Inventor: Kuo, Richard-Lee, Neihu District Taipei City 11493 (TW)
(74) Representative: Görz, Ingo

(57) **Abstract**

A method and apparatus for an eNodeB (eNB) are disclosed to allocate random access channel (RACH) resources in a wireless communication system. The method includes configuring a user equipment (UE) with an uplink (UL) component carrier (CC) set and a downlink (DL) component carrier set for carrier aggregation (CA). The method further includes pairing an uplink component carrier that has random access channel (RANCH) resources and that is in the uplink component carrier set with a downlink component carrier in the downlink component carrier set for random access. The method also includes receiving a random access preamble message on the UL CC from the UE and transmitting a random access response message on the paired DL CC in response to reception of the random access preamble message during a random access procedure.

## Description

### CROSS-REFERENCE TO RELATED APPLICATIONS

The present Application for Patent claims the benefit of U.S. Provisional Patent Application Serial No. 61/290,173, filed on December 24, 2009, entitled "Method and Apparatus of RACH Resources Allocation for Carrier Aggregation in a Wireless Communication System".

### FIELD

This disclosure relates generally to a method and apparatus for an eNodeB (eNB) to allocate random access channel (RACH) resources for carrier aggregation in a wireless communication network.

### BACKGROUND

In a typical wireless communication network utilizing the 3GPP or 3GPP2 protocol standards, it could be expected that a random access procedure needs to be initiated on an uplink component carrier to obtain the timing advance needed for uplink transmissions. Therefore, what is needed is a method and apparatus for an eNodeB (eNB) to efficiently allocate random access channel (RANCH) resources to a user equipment (UE) for the necessary random access procedure.

### SUMMARY

A method and apparatus for an eNodeB (eNB) are disclosed to allocate random access channel (RACH) resources in a wireless communication system. The method includes configuring a user equipment (UE) with an uplink (UL) component carrier (CC) set and a downlink (DL) component carrier set for carrier aggregation (CA). The method further includes pairing an uplink component carrier that has random access channel (RACH) resources and that is in the uplink component carrier set with a downlink component carrier in the downlink component carrier set for random access. The method also includes receiving a random access preamble message on the UL CC from the UE and transmitting a random access response message on the paired DL CC in response to reception of the random access preamble message during a random access procedure.

### BRIEF DESCRIPTION OF THE DRAWINGS

FIG. 1 shows a multiple access wireless communication system according to one embodiment of the invention.

FIG. 2 is a block diagram of an embodiment of a transmitter system (also known as the access network (AN)) and a receiver system (also known as access terminal (AT) or user equipment (UE)) according to one embodiment of the invention.

FIG. 3 shows an alternative functional block diagram of a communication device according to one embodiment of the invention.

FIG. 4 is a simplified block diagram of the program code shown in FIG. 3 according to one embodiment of the invention.

FIG. 5 outlines an exemplary flow diagram to allocate RACH resources according to one aspect of the invention.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP2 UMB (Ultra Mobile Broadband), WiMax, or some other modulation techniques.

In particular, The exemplary wireless communication systems devices described below may be designed to support one or more standards such as the standard offered by a consortium named "3rd Generation Partnership Project" referred to herein as 3GPP, including Document Nos. 3GPP TR 36.814 ("Further Advancements for E-UTRA Physical Layer Aspects (Release 9)"), 3GPP TSG-RAN WG2 R2-095898 ("RACH and carrier aggregation"), 3GPP TSG-RAN WG2 R2-094778 ("Anchor component carrier confusion in idle mode"), 3GPP TSG-RAN WG2 R2-094719 ("On DL component carrier ambiguity in initial random access procedure"), 3GPP TSG-RAN WG2 R2-094993 ("Initial RACH procedure discussion for CA"), 3GPP TSG-RAN WG2 R2-097016 ("Issue at initial RACH procedure in asymmetric"), 3GPP TSG-RAN WG2 R2-096486 ("Scheduling aspects for carrier aggregation"). The standards and documents listed above are hereby expressly incorporated herein.

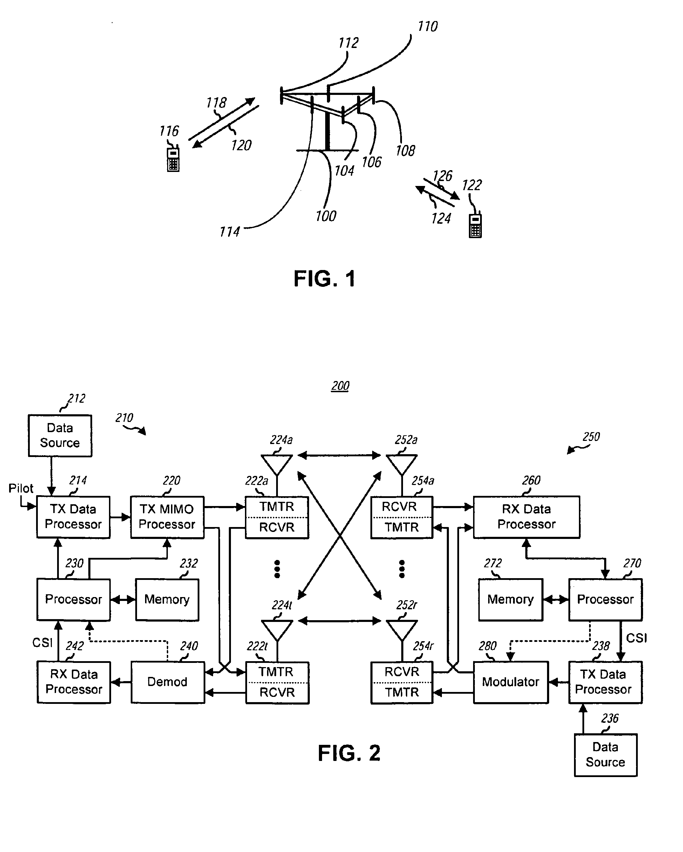

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 utilize beamforming in order to improve the signal-to-noise ratio of forward links for the different access terminals 116 and 124. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB or eNB, or some other terminology. An access terminal (AT) may also be called user equipment (UE), a wireless communication device, terminal, access terminal or some other terminology.

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

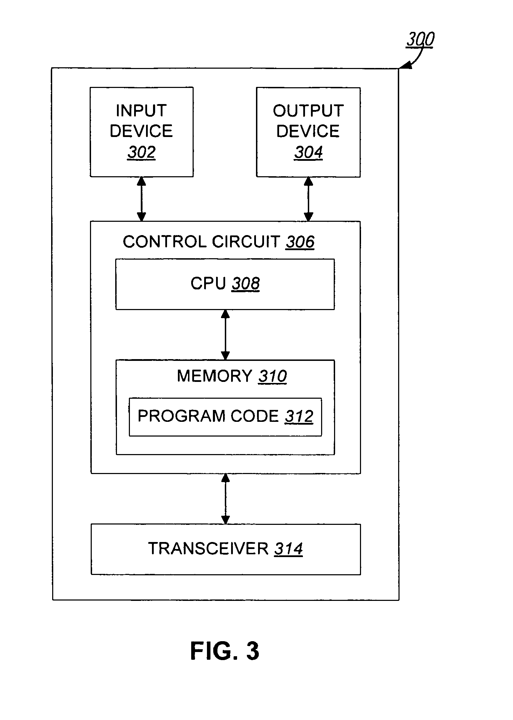

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 106 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

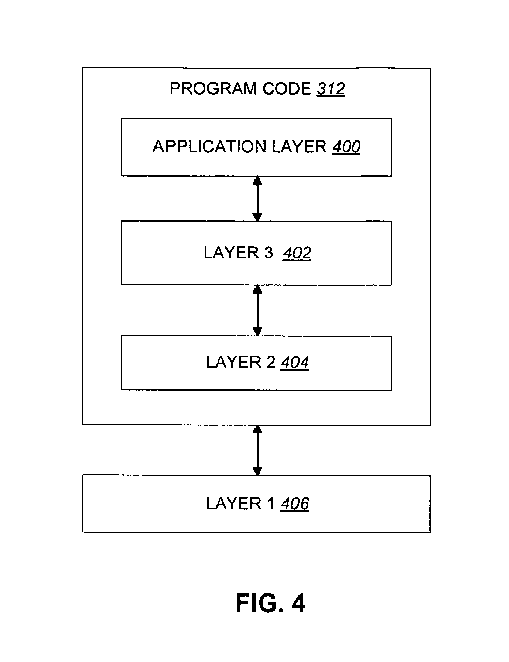

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 406 generally performs link control. The Layer 1 portion 408 generally performs physical connections.

In the following discussion, the invention will be described mainly in the context of the 3GPP architecture reference model. However, it is understood that with the disclosed information, one skilled in the art could easily adapt for use and implement aspects of the invention in a 3GPP2 network architecture as well as in other network architectures.

In one embodiment, as described in 3GPP TR 36.814 Release 9, carrier aggregation, where two or more component carriers are aggregated, is supported in order to support wider transmission bandwidths. A terminal may simultaneously receive or transmit on one or multiple component carriers depending on its capabilities. For example, a LTE-Advanced terminal with reception and/or transmission capabilities for carrier aggregation can simultaneously receive and/or transmit on multiple component carriers (CC). As another example, a LTE terminal can receive and transmit on a single component carrier, provided that the structure of the component carrier follows the specifications. Furthermore, it is possible to configure a UE to aggregate a different number of component carriers of possibly different bandwidths in the uplink (UL) and the downlink (DL).

In addition, a terminal may simultaneously receive or transmit one or multiple component carriers depending on its capabilities. Basically, the number of carriers may depend on QoS, traffic load of carrier, and carrier coverage. Thus, asymmetric uplink (UL) and downlink (DL) numbers of carriers are possible for UL-dominated and DL-dominated data transfers. When carrier aggregation (CA) is configured, it is possible that RACH resources may be available on multiple uplink carriers.

3GPP TSG-RAN WG2 R2-095898 provides the following description of the RACH resources for a UE when CA is configured:
When a UE is allocated more than one UL CC for carrier aggregation, there is the potential for the UE to have available to it more than one RANCH. Each UL CC that it is assigned could support a RACH, and, in fact, where there are an asymmetric UL and DL numbers of carriers, e.g. two DL CC both paired to one UL CC, the UE could be assigned two sets of RACH parameters on the one UL CC when the RACH for each DL CC is mapped to the same UL CC by way of partitioning e.g. by time partitioning. It is assumed that, if RACH resources on an UL CC are partitioned between two or more DL CCs these are seen as separate RACH entities by the UE.

As described above, in this asymmetric CA allocation (i.e. one UL CC and two DL CCs), one UL CC can be mapped to two DL CCs for performing the random access procedure.

The issue of RACH resource combination for an asymmetric CA allocation is also discussed in the following contributions (and documents): 3GPP TSG-RAN WG2 R2-094778, 3GPP TSG-RAN WG2 R2-094719, 3GPP TSG-RAN WG2 R2-094993, and 3GPP TSG-RAN WG2 R2-097016. These contributions all assumed one UL CC can be mapped to multiple DL CCs for random access procedure.

As discussed in the contributions and documents listed above, one UL CC may be mapped to multiple DL CCs for random access procedure. Therefore, the following CA configurations for different UEs linked with the same special cell or serving cell (i.e. DL CC1/UL CC2) are possible:
(1) UE 1 - DL: CC1, CC3; UL: CC2, CC4
(2) UE 2 - DL: CC1, CC5; UL: CC2, CC4
(3) UE 3 - DL: CC1, CC7; UL: CC2, CC4, CC6

And the RACH resources allocations for UE 1, UE2, and UE3 are assumed as follows:
(1) UE 1 - CC1/CC2, CC3/CC4
(2) UE 2 - CC1/CC2, CC5/CC4
(3) UE 3 - CC1/CC2, CC7/CC4

The above RACH resources allocations means that UL CC2 is always paired with DL CC1 for random access procedure and UL CC4 may be paired with different DL CCs (i.e. CC3, CC5, or CC7) for different UEs. When the same UL carrier (e.g. CC4) is associated with different DL carriers for different UEs (e.g. CC3, CC5, and CC7), eNB has to transmit the Response message on CC3, CC5, and CC7 when a preamble message is received on CC4 (e.g. sent by UE1) because eNB is not aware of the UE upon reception of the preamble message. Such allocations would use more DL resources and may cause additional collisions on other carriers (e.g. CC5 and CC7) as well as more interference between neighboring cells each time when a random access procedure is initiated by a UE. To avoid these drawbacks, it would be better to avoid from mapping one UL CC to multiple DL CCs for random access procedure.

Instead, the mapping between UL CC and DL CC for random access should be constrained to allow an UL CC to pair with one DL CC. Two levels of constraints (i.e. within the UE scope and the eNB scope) can be applied. Furthermore, there will usually be at least one DL CC to broadcast the system information for an uplink CC with RACH resources, it would be beneficial to pair the UL CC to this DL CC so as to reduce signalling overhead when CA is configured (i.e. no need to include another DL carrier information - e.g. at least Cell ID, Carrier frequency, and Bandwidth). In doing so, potential interferences and collisions would be reduced.

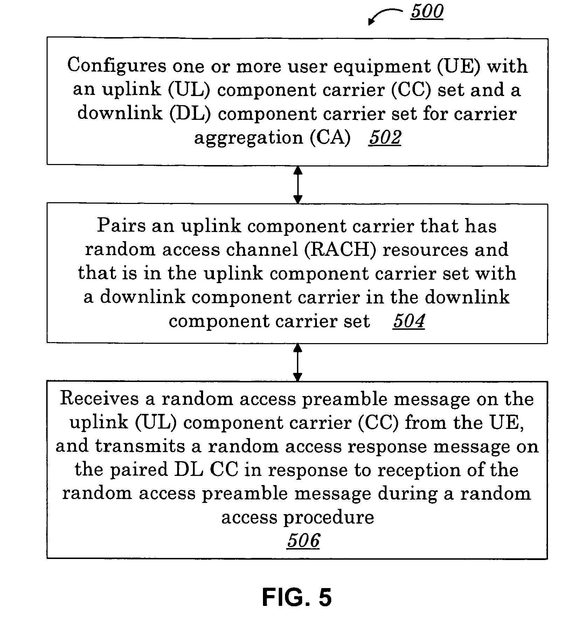

Turning now to FIG. 5, this figure outlines an exemplary flow diagram 500 to allocate RACH resources according to one embodiment of the invention. In step 502, an eNB configures one or more UE with an uplink (UL) component carrier (CC) set and a downlink (DL) component carrier set for carrier aggregation (CA). In one embodiment, the carrier aggregation is configured using a dedicated radio resource control (RRC) message (such as a RRC connection reconfiguration message). In step 504, the eNB pairs an uplink component carrier that has random access channel (RACH) resources and that is in the uplink component carrier set with a downlink component carrier in the downlink component carrier set for random access. Furthermore, the above-mentioned dedicated RRC message could indicate the pairing relationship between the paired UL CC and DL CC, and could include random access channel (RACH) configuration information. In an alternative embodiment, the paired UL CC and DL CC could form a cell. In one embodiment, the RACH configuration information could define the RACH resources used for random access. In step 506, the eNB receives a random access preamble message on the UL CC from the UE and transmits a random access response message on the paired DL CC in response to reception of the random access preamble message during a random access procedure.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for an eNodeB (eNB) to allocate random access channel (RACH) resources in a wireless communication system, comprising:
configuring a user equipment (UE) with an uplink (UL) component carrier (CC) set and a downlink (DL) component carrier set for carrier aggregation (CA);
pairing an uplink component carrier that has random access channel (RACH) resources and that is in the uplink component carrier set with a downlink component carrier in the downlink component carrier set for random access; and
receiving a random access preamble message on the UL CC from the UE and transmitting a random access response message on the paired DL CC in response to reception of the random access preamble message during a random access procedure.

2. The method of claim 1, wherein the UL CC and the paired DL CC forms a cell.

3. The method of claim 1 or 2, further comprises:
sending a dedicated radio resource control (RRC) message to configure the user equipment for carrier aggregation.

4. The method of claim 3, wherein pairing relationship between the UL CC and the paired DL CC is indicated in the dedicated RRC message.

5. The method of claim 3 or 4, wherein a PRACH configuration for the UL CC is included in the dedicated RRC message to define the RACH resources.

6. The method of any one of claims 3 to 5, wherein the dedicated RRC message is a RRC connection reconfiguration message.

7. An apparatus for an eNodeB (eNB) to allocate random access channel (RACH) resources in a wireless communication system, comprising:
a first module adapted to configure a user equipment (UE) with an uplink (UL) component carrier (CC) set and a downlink (DL) component carrier set for carrier aggregation (CA);
a second module adapted to pair an uplink component carrier that has random access channel (RACH) resources and that is in the uplink component carrier set with a downlink component carrier in the downlink component carrier set for random access; and
a third module adapted to receive a random access preamble message on the UL CC from the UE and to transmit a random access response message on the paired DL CC in response to reception of the random access preamble message during a random access procedure.

8. The apparatus of claim 7, wherein the UL CC and the paired DL CC forms a cell.

9. The apparatus of claim 7 or 8, wherein the first module sends a dedicated radio resource control (RRC) message to configure the user equipment for carrier aggregation.

10. The apparatus of claim 9, wherein the dedicated RRC message indicates pairing relationship between the UL CC and the paired DL CC.

11. The apparatus of claim 9 or 10, wherein a PRACH configuration for the UL CC is included in the dedicated RRC message to define the RACH resources.

12. The apparatus of any one of claims 9 to 11, wherein the dedicated RRC message is a RRC connection reconfiguration message.
